# EUROPEAN PATENT SPECIFICATION

(11) **EP 3 695 123 B1**
(45) Date of publication and mention of the grant of the patent: **06.12.2023**
(21) Application number: 18793449.2
(22) Date of filing: 05.10.2018
(51) Int. Cl.: F15B 1/02

(54) **HYDRAULIC SYSTEM AND A CONTROL SYSTEM FOR THE SAME**
EIN HYDRAULISCHES SYSTEM UND EIN DAFÜR GEEIGNETES STEUERUNGSSYSTEM
SYSTEME HYDRAULIQUE ET SYSTEME DE COMMANDE ASSOCIE

(30) Priority: 09.10.2017 FI 20175884
(43) Date of publication of application: 19.08.2020
(73) Proprietor: Norrhydro OY, 96300 Rovaniemi (FI)
(72) Inventor: LAPPALAINEN, Ari, 33800 Tampere (FI); SAHLMAN, Mika, 33840 Tampere (FI); MÄKITALO, Jussi, 33800 Tampere (FI); STAMBRO, Peter, Hawthorn Woods Illinois 60047 (US)
(74) Representative: Berggren Oy
(86) International application number: PCT/FI2018/050716
(87) International publication number: WO 2019/073114

(56) References cited:
- WO-A1-2007/104539
- WO-A1-2010/040890
- WO-A1-2014/120930
- WO-A1-2016/040484
- DE-A1-102013 114 040
- US-A1- 2012 060 777

## Description

### Field of the invention

The solution presented relates to a system which operates hydraulically. The solution also relates to a method for controlling the hydraulic system.

### Background of the invention

Hydraulic systems apply hydraulic pressure accumulators for receiving and storing pressurized hydraulic fluid. Pressurized hydraulic fluid may be returned from the pressure accumulator to the hydraulic system, if needed. Consequently, a given amount of energy can be stored in the pressure accumulator, to be returned for use in the hydraulic system, for example to one or more hydraulic actuators. A volume flow of hydraulic fluid can be conveyed from the pressure accumulator to the actuator which may be kept in motion by said volume flow from the pressure accumulator.

A predetermined maximum amount of hydraulic fluid may be stored in the pressure accumulator so that, for example, the movement of an actuator cannot be maintained indefinitely, because the pressure accumulator will be exhausted and normally its pressure will go down simultaneously. Running out of the volume flow of hydraulic fluid may result in such changes in the behaviour of the actuator that are uncontrollable or undesirable, such as an abrupt reduction in the speed of the actuator.

Document US 2012/0060777 A1 discloses a hydraulic system including an accumulator and an actuator, as disclosed in the preamble of claim 1.

### Brief summary of the invention

The system which operates hydraulically according to the presented solution is disclosed in claim 1.

The method for controlling the system according to the presented solution is disclosed in claim 11.

Some examples of the solution are presented in the other claims.

The system according to the solution presented, operated hydraulically, comprises a pressure line providing pressurized hydraulic fluid; a pump configured to supply pressurized hydraulic fluid to the pressure line; an actuator connected to the pressure line for receiving pressurized hydraulic fluid from the pressure line and for moving the actuator; a valve device configured to control the flow of pressurized hydraulic fluid from the pressure line to the actuator, and the speed of the actuator; an electronic control unit configured to monitor and control the functions of the system, to control the valve device by a control signal which is proportional to the desired speed of the actuator at any given time; a pressure accumulator connected to the pressure line from which the pressure accumulator is adapted to receive pressurized hydraulic fluid and to which the pressure accumulator is adapted to, simultaneously with a pump, supply pressurized hydraulic fluid for running the actuator; a sensor device; and setting devices configured to generate a setting signal and to set the control signal to be proportional to the speed of the actuator desired at any given time.

In a first embodiment, the sensor device is configured to measure the pressure of the hydraulic fluid contained in the pressure line at any given time, and transmit a measurement signal proportional to the pressure of the hydraulic fluid, to the electronic control unit. The electronic control unit is configured to deduce the amount of hydraulic fluid in the pressure accumulator from properties of the pressure accumulator and the pressure of the hydraulic fluid.

In a second embodiment, the sensor device is configured to measure, directly or indirectly, the amount of pressurized hydraulic fluid in the pressure accumulator at any given time, and transmit a measurement signal proportional to the amount of pressurized hydraulic fluid, to the electronic control unit. The sensor device is connected to the pressure accumulator.

In the presented solution, the actuator is a linear actuator and the electronic control unit is configured to limit the targeted speed of the linear actuator not to exceed a predetermined maximum speed, the maximum speed being proportional to the amount of pressurized hydraulic fluid in the pressure accumulator.

In an example of the solution presented, the electronic control unit is configured to limit the targeted speed of the actuator to a maximum speed which is proportional to not only the above mentioned amount but also the pressure of the pressurized hydraulic fluid in the pressure accumulator.

In an example of the presented solution, the electronic control unit is configured to limit the targeted speed of the actuator to a maximum speed which is proportional to not only the above mentioned amount and pressure but also the power generated by the actuator at any given time.

In the method according to the solution presented, the targeted speed of the actuator is limited not to exceed a predetermined maximum speed which is proportional to the amount of pressurized hydraulic fluid in the pressure accumulator.

The system according to the solution presented may be applied in a crane which comprises a boom for lifting and transferring loads, or in a mobile machine comprising the crane. The boom is configured to be movable by the system.

The hydraulic control system according to the solution presented has the advantage of maximum utilization of the energy stored in the pressure accumulator, avoiding an abrupt change in the speed of the actuator, caused by exhaustion of the pressure accumulator.

### Description of the drawings

The presented solution will be described in greater detail in the following, with reference to the accompanying drawings.
Figure 1 shows a principle of implementing a hydraulic system and its control system, in which the solution presented can be applied.
Figure 2 shows a principle of controlling the speed v of the actuator of the system of Fig. 1, and setting its maximum speed vmax on the basis of the amount V of hydraulic fluid in the pressure accumulator.

### Detailed description of the invention

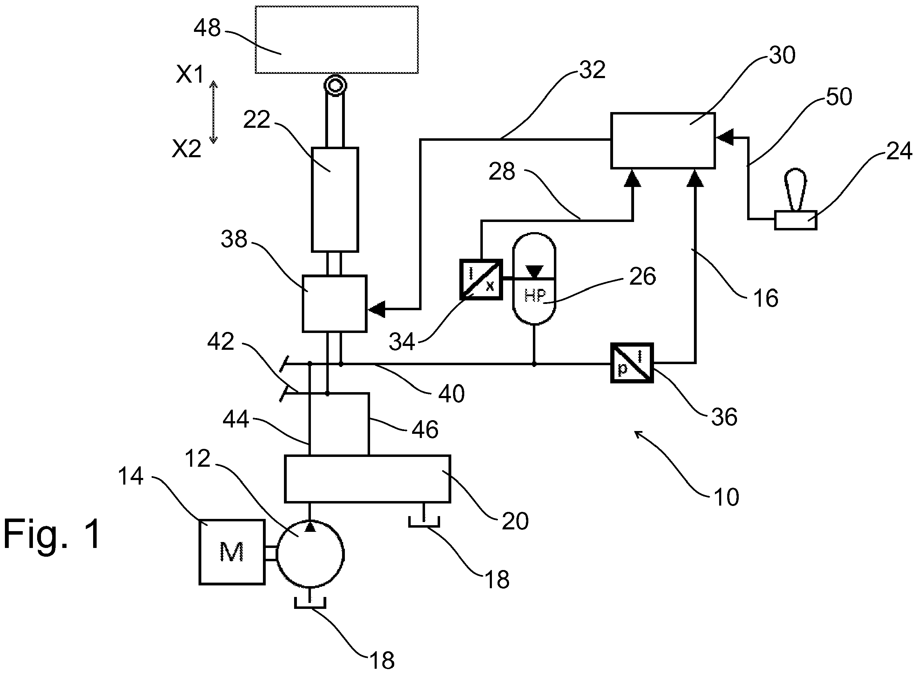

Figure 1 shows an example of a hydraulic system and control system for controlling it, in which example the solution presented may be applied.

The hydraulic system according to the solution presented, and its control system, in other words a system 10, comprises a pressure line 40, at least one actuator 22, at least one valve device 38 for controlling the volume flow of hydraulic fluid, at least one hydraulic pressure accumulator 26, at least one sensor device 34 and/or a sensor device 36, at least one hydraulic pump 12, and an electronic control unit 30 controlling the operation of the system 10.

The actuator 22 may be configured to move a load 48 to which the actuator applies a force which is dependent on the pressure of the hydraulic fluid supplied to the actuator 22, and the sizing of the actuator 22. Preferably, it is a linear actuator, for example a hydraulic cylinder, comprising a reciprocating piston. The actuator 22 is configured to move in two opposite directions X1 and X2. When hydraulic fluid is supplied to the actuator 22, the actuator 22 either expands and moves in the direction X1, or contracts and moves in the direction X2. In an example, when hydraulic fluid is conveyed away from the actuator 22, the actuator 22 moves in the opposite direction with respect to the situation in which hydraulic fluid is supplied into the actuator 22. The speed of the actuator 22, its piston, or the load 48 will depend on the sizing of the actuator 22 and the volume flow rate of hydraulic fluid supplied to the actuator 22, that is, the flow of hydraulic fluid per unit of time, and the volume of the actuator 22.

The actuator 22 is connected to the pressure line 40 for supplying pressurized hydraulic fluid to the actuator 22. Valve devices, such as a valve device 20, may be connected to the pressure line 40 for limiting the pressure of hydraulic fluid in the pressure line 40 to a predetermined maximum value.

The actuator 22 may be single or double acting. The actuator 22 may be a single chamber, double chamber or multi chamber actuator. For moving the actuator 22, hydraulic fluid is supplied to one or more chambers of the actuator 22 simultaneously. During the operation of the actuator 22, hydraulic fluid may exit one or more chambers of the actuator 22 simultaneously.

The pump 12 is configured to supply pressurized hydraulic fluid to the pressure line 40. The pump 12 is connected to the pressure line 40 via, for example, a line 44. The maximum volume flow and the maximum pressure of the hydraulic fluid produced by the pump 12 will depend on the sizing of the pump 12.

The pump 12 is of a fixed volume type or preferably an adjustable-displacement pump, whereby the volume flow produced by the pump 12 can be adjusted, for example, within limits set by predetermined minimum and maximum values. The pump 12 is rotated by a motor 14. The motor 14 is, for example, an electric motor or a combustion engine.

The pump 12 is supplied with hydraulic fluid from, for example, a tank 18 for hydraulic fluid.

The hydraulic fluid is returned from the actuator 22 to, for example, another pressure line 42, in which the pressure of the hydraulic fluid is lower than in the pressure line 40. The pressure line 42 may also be used as a tank line, via which the hydraulic fluid returning from the actuator 22 will flow into the tank 18. The tank 18 is connected to the pressure line 40 via, for example, a line 46.

The system 10 may comprise a valve device 20 by which the access and flow of hydraulic fluid from the pump 12 to the pressure line 40, and *vice versa,* can be controlled. The valve device 20 may be placed, for example, in the line 44. The valve device 20 may also be configured to control the access and flow of hydraulic fluid from the pressure line 40 to the tank 18. The valve device 20 may comprise one or more control valves.

The valve device 38 controls the flow of hydraulic fluid from the pressure line 40 to the actuator 22, for example to and from one or more of its chambers. Preferably, the valve device 38 is also configured to close the connection and the volume flow between the pressure line 40 and the actuator. The valve device 38 controls the volume flow rate of the hydraulic fluid, on which the speed of the actuator 22, in turn, is dependent. The maximum volume flow dependent on the sizing of the valve device 38 simultaneously determines the maximum speed of the actuator 22. For adjusting the volume flow, the valve device 38 is preferably electronically controllable.

The valve device 38 may comprise one or more control valves which may be, for example, of the type of a proportional directional valve which is electronically controllable and whose volume flow is proportional to a control signal received by the valve device 38. Said control valve is, for example, a proportional two-way two-position directional control valve. Said control valve may be a position feedback valve, a force feedback valve, or a speed feedback valve. For each chamber of the actuator 22, one control valve or several parallel control valves are provided for supplying hydraulic fluid from the pressure line 40 to the actuator 20. Alternatively, said parallel control valves may be, for example, on/off controlled directional valves or shut-off valves.

The valve device 38 is controlled by an electronic control unit 30 which may comprise, for example, one or more electronic control cards for controlling the valve device 38. The function of the control unit 30 is to generate a control signal 32, for example a current signal, for controlling the valve device 38.

The functions of the system 10 are monitored and controlled by the control unit 30. The control unit 30 is preferably a programmable microprocessor based device which runs one or more control algorithms stored in its memory and performing computing and logic functions. The control unit 30 comprises the interface for connecting, for example, signals generated by sensors and control devices, and for connecting control signals generated in the control unit 30. Said control algorithms produce, for example on the basis of said signals, a predetermined control signal at any given time. The control unit 30 is, or may be, provided with user interface devices for controlling the operation of the control unit 30. The control unit 30 may be based on a programmable logic or a computer operated under control of a control program or a user. The control unit 30 may consist of one or several separate devices, or it may constitute a distributed system whose different parts or devices are connected to each other or communicate with each other.

The control signal 32 is dependent on, for example, the speed of the actuator 22 or the volume flow which is to be implemented by the valve device 38 at any given time. In generating said control signal 32, a controller may be applied, such as a PID controller, which is implemented in the control unit 30 and is based on, for example, position feedback, force feedback, or speed feedback. For the control, the system 10 may comprise sensor devices for measuring the speed of the actuator 22 and for transmitting said measurement signal to the control unit 30.

The system 10 may also comprise one or more control devices 24 connected to the control unit 30 for the purpose of controlling the system 10, for example the actuator 22 therein. The control device 24 is, for example, manually controllable, in one example a control stick. The control stick is operated by a user.

The control device 24 is configured to generate a setting signal 50 dependent on the position of the control device 24, for example the inclination of the control stick. Said setting signal 50 is input in the control unit 30.

Alternatively, said setting signal 50 can be input with input devices, which may include, for example, the control unit 30 or a part of it, a device connected to the control unit 30, or the above described control device 24. In the control unit 30, the setting signal 50 may be input manually by user interface devices of the control unit 30, or it may be generated by software by running control algorithms for influencing the speed of the actuator 22.

For example, the control device 24 is used to control the speed of the actuator 22 so that the speed of the actuator 22 is different in different positions of the control device 24 or control stick. The desired speed of the actuator 22 is proportional to the position of the control device 24 or control stick. The control algorithm of the control unit 30 is configured to control the valve device 38 on the basis of the setting signal 50 so that the desired speed of the actuator 22 is achieved.

The pressure accumulator 26 is connected to the pressure line 40, from which the pressure accumulator 26 may receive pressurized hydraulic fluid and to which the pressure accumulator 26 gives pressurized hydraulic fluid. The pressure accumulator 26 has a predetermined effective volume based on its sizing and proportional to the maximum quantity of hydraulic fluid that can be supplied from the pressure accumulator 26 to the pressure line 40, for example within a given period of time.

The pressure accumulator 26 may be a weight loaded accumulator, a spring loaded accumulator, or preferably a gas loaded accumulator. The type of said gas loaded accumulator is a bladder accumulator or a membrane accumulator, or preferably a piston accumulator. It is typical of a gas loaded accumulator that the pressure of the hydraulic fluid contained in it decreases as the amount of said hydraulic fluid decreases.

If necessary, on the basis of the above mentioned dependence, the amount of hydraulic fluid in the pressure accumulator 26 can be estimated by measuring the pressure of said hydraulic fluid, for example, in the line to which the pressure accumulator 26 is connected, such as the pressure line 40.

For charging, the pressure accumulator 26 can be supplied with pressurized hydraulic fluid. The pressure accumulator 26 is sized, for example, to receive hydraulic fluid when the pressure of the hydraulic line 40 is equal to or higher than a predetermined minimum pressure. The sizing of a gas loaded accumulator is based on e.g. the pre-charge pressure of the gas used in the pressure accumulator. Said minimum pressure is selected to be e.g. lower than the pressure prevailing in the pressure line 40, for example, when a load 48 is moved by the actuator 22 or when the actuator 22 is at rest.

The pressure line 40 may be provided with a sensor device 36 configured to measure the pressure of the hydraulic fluid contained in the pressure line 40. The system 10 may also comprise other sensor devices which measure the pressure of the hydraulic fluid and are connected to the control unit 30, for example for measuring the pressure in the pressure line 40.

The sensor device 36 generates a measurement signal 16 which is, for example, electronic, the measurement signal 16 being proportional to the measured pressure. The signal is, for example, a current signal. The sensor device 36 is connected to the control unit 30 for transmitting the measurement signal 16 to the control unit 30 where the measurement signal 16 is an input for a control algorithm.

On the basis of the measurement signal 16 generated by the sensor device 36, the amount of hydraulic fluid in the pressure accumulator 26 can be measured indirectly by measuring the pressure in the pressure line 40. The control unit 30 is configured to deduce the amount of hydraulic fluid in the pressure accumulator from e.g. the properties of the pressure accumulator 26 and said pressure. In said deduction, the control unit 30 may take into account, for example, the known behaviour of changes, e.g. an adiabatic change, in the pre-charge pressure or in the volume of the gas in the pressure accumulator 26. In the pressure accumulator 26, the pressure of the gas follows the pressure of the hydraulic fluid which, in turn, tends to follow the pressure in the pressure line 40, and the volume of the gas, in turn, is dependent on the pressure of the gas.

In an alternative of the solution presented, the system 10 comprises a sensor device 34 connected to the pressure accumulator 26 and configured to measure the amount of hydraulic fluid in the pressure accumulator 26, either directly or indirectly. The sensor device 34 may be configured to measure the amount of hydraulic fluid e.g. indirectly, based on the measured position of a moving part of the pressure accumulator 26, dependent on the amount of hydraulic fluid. Said part may be, for example, the bladder of a bladder accumulator, the membrane of a membrane accumulator, or preferably the piston of a piston accumulator. The operation of the sensor device 34 may be based on touch-less measurement, a linear sensor, or a cable traction device.

The sensor device 34 generates a measurement signal 28 which is, for example, electronic, the measurement signal 28 being proportional to the amount of hydraulic fluid in the pressure accumulator, or the above mentioned measured position. The signal is, for example, a current signal. The sensor device 34 is connected to the control unit 30 for transmitting the measurement signal 28 to the control unit 30 where the measurement signal 28 is an input for a control algorithm. Either the sensor device 34 or the control unit 30 and its control algorithm may deduce the amount of hydraulic fluid in the pressure accumulator 26, proportional to said measured position.

With the sensor device 34, a precise measurement signal 28 can be achieved in a simple way, when uncertainties relating to the measurement of the pressure and the behaviour of the gas are to be avoided.

The pressure accumulator 26 and the pump 12 are configured to supply hydraulic fluid to the actuator 22 via the pressure line 40 and the valve device 38 simultaneously, for moving the actuator 22. The pressure of the hydraulic fluid is thus, according to a first example, sized to be sufficient to move at least the actuator 22 and also a load 48, if necessary. The magnitude of the load 48 may be different or vary in different situations, whereby the force needed for moving it may vary. When the actuator 22 and the load 48 stop, the pressure may increase further up to the maximum value set for the pressure line 40, and the pressure accumulator 26 may be charged with pressurized hydraulic fluid. Alternatively, upon a sufficient increase in the pressure during movement of the actuator 22 and the load 48, the pressure accumulator 26 may be charged with pressurized hydraulic fluid.

The maximum overall volume flow produced by the pressure accumulator 26 and the pump 12 will determine the maximum speed of the actuator 22, because the volume flow represents the quantity of hydraulic fluid flowing per time unit. In the solution presented, the maximum volume flow produced by the pump 12 is lower than said maximum overall volume flow. In an example, the maximum volume flow produced by the pump 12 is 80%, 60%, 40%, or 20% of said maximum overall volume flow, or lower.

The speed of the actuator 22 is controlled to be lower than said maximum speed by using a valve device 38 which is controlled by a control signal 32 generated by the control unit 30 on the basis of e.g. a setting signal 50.

The pressure accumulator 26 may be in a state in which the total amount of hydraulic fluid in it is lower than the quantity of hydraulic fluid to be supplied from the pressure accumulator 26 to the actuator 22 for moving the actuator 22 a desired or predetermined distance at a desired speed, under control of the valve device 38 and, for example, the setting signal 50.

In the presented solution, the maximum volume flow produced by the pump 12 is sized to be lower than the volume flow of hydraulic fluid to be supplied from the pressure line 40 to the actuator 22 for moving the actuator 22 at the maximum speed. In an example, the maximum volume flow produced by the pump 12 is configured to generate 80%, 60%, 40%, or 20% of said maximum speed, or less.

The system 10 may be in the above described situation in which the total amount of hydraulic fluid in the pressure accumulator 26 is not sufficient for the entire desired travel distance of the actuator 22. Thus, as the pressure accumulator 26 is being exhausted, the speed of the actuator 22 may fall down from the desired speed in an abrupt and uncontrolled manner, after which the movement of the actuator 22 will be continued at a speed dependent on the volume flow produced by the pump 12.

In the presented solution, the aim is to avoid the above described problem.

In the presented solution, the amount of hydraulic fluid in the pressure accumulator 26 at any given time is monitored by the control unit 30, by utilizing the sensor device 34 and/or the sensor device 36 as described above.

The control unit 30 is, under control of a control algorithm, configured to restrict the maximum speed of the actuator 22 to a maximum value proportional to the amount of hydraulic fluid in the pressure accumulator 26. Consequently, the speed of the actuator 22 can be controlled to have only such a value or magnitude that said speed, at its highest, is equal to or lower than said maximum value. The speed of the actuator 22 is controlled by the valve device 38 and e.g. the setting signal 50, as described above.

As the restricting is only based on the amount of hydraulic fluid in the pressure accumulator 26, a simple operation is achieved, in terms of the control.

Thus, when the above described restriction is in use, the setting signal 50 cannot be used to adjust the speed of the actuator 22 to a value that exceeds the above mentioned maximum value. The control unit 30 controls the valve device 38 in such a way that the control signal 32 generated by the control unit 30 and the control algorithm is now dependent on not only the setting signal 50 but also the amount of hydraulic fluid in the pressure accumulator 26. The amount of hydraulic fluid in the pressure accumulator 26, in turn, is measured by the sensor device 34 and/or the sensor device 36.

If the system 10 comprises the control device 24, a predetermined position of the control device 24 will generate a predetermined setting signal 50. Thus, when the above described restriction is in use, a given position of the control device 24 will result in such a speed of the actuator 22 that may be lower than the speed resulting from the same position in a situation in which the above described restriction is not in use. In such a situation, the user of the control device 24 will detect a deceleration of the actuator 22 even if the user would not change the position of the control device 24.

By means of the above described restricting, it is possible to control the changing of the speed of the actuator 22, whereby an abrupt and uncontrolled drop in the speed, as described above, is avoided.

The volume flow supplied by the pressure accumulator 26 to the actuator 22 will depend on the sizing of the connections, the pressure line 40 and the valve device 38, such as the nominal size of the control valve. In the above described method, when the restricting is not in use, the valve device 38 may be controlled so that the flow of hydraulic fluid is not restricted and/or the flow opening(s) of one or more control valves therein is (are) the largest. When the restricting is to be taken into use, the valve device 38 is controlled so that the flow of hydraulic fluid is restricted and/or the flow opening(s) of one or more control valves therein is (are) made smaller.

According to an example of the solution presented, the control unit 30 is, under control of a control algorithm, configured to restrict the speed of the actuator 22 in the above described way, taking into account the amount of hydraulic fluid in the pressure accumulator 26, as well as the pressure of the hydraulic fluid in the pressure accumulator 26. Said pressure is determined by, for example, the sensor device 36.

On the basis of said amount and pressure, the control unit 30 deduces the amount of energy stored in the pressure accumulator 26. The pressure accumulator 26 supplies energy on the basis of its amount of pressurized hydraulic fluid which can be supplied in a given time and at a given volume flow rate. The aim is to secure the energy supply by also restricting the power of the actuator 22 so that its speed is simultaneously restricted in a desired way. The speed can be determined, for example, on the basis of the force generated by the actuator 22 which, in turn, depends on the pressure and the sizing of the actuator 22.

Consequently, in an example of the presented solution, the control unit 30 is, under control of a control algorithm, configured to restrict the speed of the actuator 22 in the above described way, taking into account the amount of hydraulic fluid in the pressure accumulator 26, the pressure of hydraulic fluid in the pressure accumulator 26, as well as the pressure generated by the actuator 22. Said force is defined, for example, by means of a sensor device or said pressure, when the sizing of the actuator are known.

In an example of the presented solution, the control unit 30 is, under control by a control algorithm, configured to restrict the maximum speed of the actuator 22 to a maximum value which is reduced when the amount of hydraulic fluid in the pressure accumulator 26 is reduced; in other words, it is the lower, the lower the amount of hydraulic fluid in the pressure accumulator 26.

In an example of the presented solution, the above described restriction is applied as a method when the amount of hydraulic fluid in the pressure accumulator 26 has dropped to a value equal to or lower than a predetermined limit value.

In an example, said predetermined limit value for the amount of hydraulic fluid in the pressure accumulator 26 is 3%, 5%, 10%, 15%, 20%, or 25% of the useful capacity of the pressure accumulator 26, or of the maximum amount of hydraulic fluid which can be supplied from the pressure accumulator 26.

In an example, and in addition to what has been described above, the control unit 30 is, under control of a control algorithm, configured to reduce the maximum speed of the actuator 22, at its lowest, to a maximum value proportional to the volume flow produced by the pump 12, for example, equal to or lower than the maximum volume flow produced by the pump 12.

The above described proportionality may be based on a function based on the amount of hydraulic fluid in the pressure accumulator 26, or it is linearly declining or following the shape of a declining curve, in view of said amount of hydraulic fluid which is decreasing.

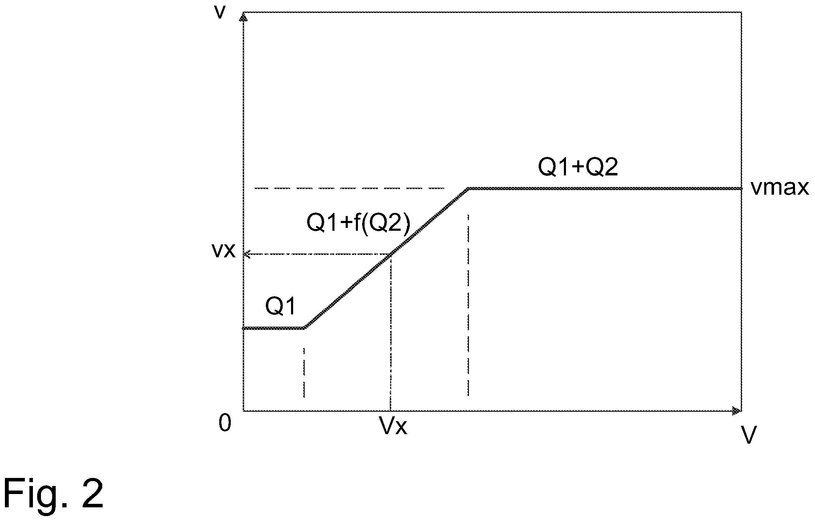

Figure 2 illustrates, with an example, the control of the speed v of the actuator 22 in the system 10, and the determination of the maximum speed vmax set for it, based on the amount V of hydraulic fluid in the pressure accumulator 26.

In the example of Fig. 2, the above described proportionality (see range Q1 +f(Q2)) is linear; in other words, it is based on a function. Said proportionality may also be based on a function which is not linear. When the amount V of hydraulic fluid has a value Vx, according to the presented solution it can be deduced that the speed v of the actuator 22 has a maximum value vmax. Thus, in such a range, also such velocities of the actuator 22 are allowable which are lower than the set maximum value.

In the example of Fig. 2, it is also implemented that the above described restriction is applied as a method when the amount of hydraulic fluid in the pressure accumulator 22 has decreased to a level equal to or lower than the predetermined limit value. When the restriction is not in use (see range Q1 +Q2), the maximum speed value vmax will be determined, at its maximum, according to the overall volume flow produced by the pump 12 and the pressure accumulator 26 in combination. Thus, in such a range, also such velocities of the actuator 22 are allowable which are lower than the set maximum value.

In the example of Fig. 2, after the amount of hydraulic fluid in the pressure accumulator 22 has decreased sufficiently or been used up, the above described restriction is also implemented so that the maximum speed of the actuator 22 is reduced, at its lowest, to a maximum value proportional to the maximum volume flow produced by the pump 12 (see range Q1). In this range, also such velocities of the actuator 22 are allowable which are lower than the set maximum value. In this case, said velocities are only based on the volume flow produced by the pump 12.

In the example of Fig. 2, the symbol Q1 represents the maximum volume flow produced by the pump 12, and the symbol Q2 represents the volume flow produced by the pressure accumulator 26 and supplied to the actuator 22.

The above described hydraulic system and its control system may be applied in various cranes for lifting and/or moving loads. For this, the crane may be equipped with a boom which may be pivotable in lateral directions by means of a slewing mechanism. The boom may comprise a hoisting boom which may be telescopic. The boom may also comprise a transfer boom which is pivotally connected to the hoisting boom. The transfer boom may be telescopic. The above presented actuator 22 may be an actuator, particularly a linear actuator, for moving the boom, transfer boom or hoisting boom, whereby the above presented load 48 may be the boom, transfer boom or hoisting boom either alone or in combination with a load carried by the boom, transfer boom or hoisting boom. The above presented crane and/or hydraulic system and its control system may be applied in various machines which may be used for hoisting or moving loads and which may be self-propelled machines controlled by a user. Said machine is a forestry machine, such as a forwarder or a felling machine, an excavating machine, or an earth moving machine. Said machine may comprise an implement, such as a bucket, connected to a mechanism for moving the implement. The above described actuator 22 may be an actuator for moving said mechanism.

In the description above, proportionality refers to such proportionality between two different variables, functions or factors which can be represented by means of, for example, a mathematical relation or function. Alternatively or in addition, said proportionality refers to a connection or interdependence between the two different variables, functions or factors, whereby predetermined states of one variable, function or factor correspond to predetermined states of the other variable, function or factor. In this way, one variable, function or factor may be used to control the other variable, function or factor, to make the system according to the presented solution operate in a targeted way.

The presented solution is not limited merely to the alternatives, examples and embodiments which have been presented above and which should not be considered the sole embodiments of the solution.

The implementation of the solution presented will be defined in more detail in the appended claims.

## Claims

1. A system (10) which operates hydraulically and comprises:
- a pressure line (40) for supplying pressurized hydraulic fluid;
- a pump (12) configured to supply pressurized hydraulic fluid to the pressure line;
- an actuator (22) connected to the pressure line, for receiving pressurized hydraulic fluid from the pressure line and for moving the actuator;
- a valve device (38) configured to control the flow of pressurized hydraulic fluid from the pressure line to the actuator, and the speed of the actuator;
- an electronic control unit (30) configured to monitor and control the functions of the system, to control the valve device by a control signal (32) dependent on the speed of the actuator desired at any given time;
- a pressure accumulator (26) connected to the pressure line, from which the pressure accumulator is adapted to receive pressurized hydraulic fluid and to which the pressure accumulator is adapted to, simultaneously with the pump, supply pressurized hydraulic fluid for moving the actuator;
the system being **characterized by**:
- a sensor device (34, 36) configured to:
- i. measure the pressure of the hydraulic fluid contained in the pressure line (40) at any given time, and transmit a measurement signal proportional to the pressure of the hydraulic fluid, to the electronic control unit (30), the electronic control unit being configured to deduce the amount of hydraulic fluid in the pressure accumulator from properties of the pressure accumulator and the pressure of the hydraulic fluid; or
- ii. measure, directly or indirectly, the amount of pressurized hydraulic fluid in the pressure accumulator at any given time, and transmit a measurement signal proportional to the amount of pressurized hydraulic fluid, to the electronic control unit (30), the sensor device being connected to the pressure accumulator;
- setting devices configured to generate a setting signal (50) and to set the control signal to be proportional with the targeted speed of the actuator at any given time;
- the actuator (22) being a linear actuator; and
- the electronic control unit (30) that is configured to restrict the targeted speed of the linear actuator not to exceed a predetermined maximum speed which is proportional to the amount of pressurized hydraulic fluid in the pressure accumulator (26).

2. The system according to claim 1, wherein the electronic control unit (30) is configured to restrict the targeted speed when the amount of pressurized hydraulic fluid is equal to or lower than a predetermined limit value.

3. The system according to claim 1 or 2,
- wherein the pump (12) is configured to produce a volume flow limited to a predetermined maximum volume flow of the pump; and
- wherein the electronic control unit (30) is configured to reduce the targeted speed of the actuator (22) to be, at its lowest, equal to a predetermined maximum speed which is proportional to the maximum volume flow of the pump.

4. The system according to any one of claims 1 to 3, wherein the lower the amount of pressurized hydraulic fluid in the pressure accumulator (26) is, the lower the predetermined maximum speed is.

5. The system according to any one of claims 1 to 4, wherein the setting devices comprise a control device (24) which is a manually controllable control stick.

6. The system according to any one of claims 1 to 5, wherein the setting devices comprise a control device (24) connected to the electronic control unit (30), configured to generate the setting signal (50), and configured to set the control signal (32) to be proportional to the position of the control device.

7. The system according to any one of claims 1 to 6, wherein the pump (12) is configured to produce a volume flow restricted to a predetermined maximum volume flow of the pump.

8. The system according to any one of claims 1 to 7, wherein the electronic control unit (30) is configured to restrict the targeted speed of the actuator (22) to a maximum speed which is proportional to not only the amount of the pressurized hydraulic fluid in the pressure accumulator (26) but also the pressure of the pressurized hydraulic fluid in the pressure accumulator.

9. The system according to claim 8, wherein the electronic control unit (30) is configured to restrict the targeted speed of the actuator (22) to a maximum speed proportional to the amount and pressure of pressurized fluid in the pressure accumulator (26), and also proportional to the power generated by the actuator at any given time.

10. The system according to any one of claims 1 to 9, wherein the linear actuator is a hydraulic cylinder.

11. A method, **characterized by**:
- providing a system according to claim 1, to be controlled by the method; and
- restricting the targeted speed of the linear actuator not to exceed a predetermined maximum speed which is proportional to the amount of pressurized fluid in the pressure accumulator (26).

12. A crane comprising:
- a boom for hoisting and transferring loads; and
- a system (10) according to any one of claims 1 to 10, the boom being configured to be movable by the system.

13. A mobile machine comprising a crane according to claim 12.

## Patentansprüche

1. System (10), das hydraulisch arbeitet und umfasst:
- eine Druckleitung (40) zur Versorgung mit unter Druck stehendem Hydraulikfluid;
- eine Pumpe (12), die geeignet ist, die Druckleitung mit unter Druck stehendem Hydraulikfluid zu versorgen;
- einen mit der Druckleitung verbundenen Antrieb (22) zur Aufnahme des unter Druck stehenden Hydraulikfluids aus der Druckleitung und zum Bewegen des Antriebs;
- eine Ventilvorrichtung (38), die geeignet ist, den Strom des unter Druck stehenden Hydraulikfluids aus der Druckleitung zum Antrieb und die Drehzahl des Antriebs zu steuern;
- eine elektronische Steuereinheit (30), die geeignet ist, die Systemfunktionen zu steuern und zu überwachen, die Ventilvorrichtung durch ein Steuersignal (32) abhängig von der zu einem gegebenen Zeitpunkt gewünschten Drehzahl des Antriebs zu steuern;
- einen Druckakkumulator (26), der mit der Druckleitung verbunden ist, von der der Druckakkumulator geeignet ist, unter Druck stehendes Hydraulikfluid aufzunehmen und an die Druckakkumulator gleichzeitig mit der Pumpe geeignet ist, unter Druck stehendes Hydraulikfluid zum Bewegen des Antriebs zu liefern;
wobei das System **gekennzeichnet ist durch**:
- eine Sensorvorrichtung (34, 36), die geeignet ist,
- i. den Druck des in der Druckleitung (40) enthaltenen Hydraulikfluids jederzeit zu messen und ein zum Druck des Hydraulikfluids proportionales Messsignal an die elektronische Steuereinheit (30) zu senden, wobei die elektronische Steuereinheit so vorgesehen ist, dass sie die Hydraulikfluidmenge im Druckakkumulator aus den Merkmalen des Druckakkumulators und dem Druck des Hydraulikfluids ableitet; oder
- ii. die Menge des unter Druck stehenden Hydraulikfluids im Druckakkumulator jederzeit direkt oder indirekt zu messen und ein zur Menge des unter Druck stehenden Hydraulikfluids proportionales Messsignal an die elektronische Steuereinheit (30) zu senden, wobei die Sensorvorrichtung mit dem Druckakkumulator verbunden ist;
- Einstellvorrichtungen, die geeignet sind, ein Einstellsignal (50) zu erzeugen und das Steuersignal so einzustellen, dass es jederzeit proportional zur angestrebten Drehzahl des Antriebs ist;
- wobei der Antrieb (22) ein Linearantrieb ist; und
- die elektronische Steuereinheit (30), die so vorgesehen ist, dass sie die angestrebte Drehzahl des Linearantriebs begrenzt, damit diese eine vorbestimmte Höchstdrehzahl nicht überschreitet, die proportional zur Menge des unter Druck stehenden Hydraulikfluids im Druckakkumulator (26) ist.

2. System nach Anspruch 1, wobei die elektronische Steuereinheit (30) so vorgesehen ist, dass sie die angestrebte Drehzahl begrenzt, wenn die Menge des unter Druck stehenden Hydraulikfluids gleich einem vorbestimmten Grenzwert oder kleiner als dieser ist.

3. System nach Anspruch 1 oder 2, wobei
- die Pumpe (12) so vorgesehen ist, dass sie einen Volumenstrom erzeugt, der auf einen vorbestimmten maximalen Volumenstrom der Pumpe begrenzt ist; und wobei
- die elektronische Steuereinheit (30) so vorgesehen ist, dass sie die angestrebte Drehzahl des Antriebs (22) so reduziert, dass diese, wenn sie am niedrigsten ist, gleich einer vorbestimmten maximalen Drehzahl ist, die proportional zum maximalen Volumenstrom der Pumpe ist.

4. System nach einem der Ansprüche 1 bis 3, wobei die vorbestimmte maximale Drehzahl umso niedriger ist, je niedriger die Menge des unter Druck stehenden Hydraulikfluids im Druckakkumulator (26) ist.

5. System nach einem der Ansprüche 1 bis 4, wobei die Einstellvorrichtungen eine Steuervorrichtung (24) umfassen, die ein manuell steuerbarer Steuerstick ist.

6. System nach einem der Ansprüche 1 bis 5, wobei die Einstellvorrichtungen eine Steuervorrichtung (24) umfassen, die mit der elektronischen Steuereinheit (30) verbunden und so vorgesehen ist, dass sie das Einstellsignal (50) generiert, und so vorgesehen ist, dass sie das Einstellsignal (32) so einstellt, dass es proportional zur Position der Steuervorrichtung ist.

7. System nach einem der Ansprüche 1 bis 6, wobei die Pumpe (12) so vorgesehen ist, dass sie einen Volumenstrom erzeugt, der auf einen vorbestimmten maximalen Volumenstrom der Pumpe begrenzt ist.

8. System nach einem der Ansprüche 1 bis 7, wobei die elektronische Steuereinheit (30) so vorgesehen ist, dass sie die angestrebte Drehzahl des Antriebs (22) auf eine maximale Drehzahl begrenzt, die proportional nicht nur zur Menge des unter Druck stehenden Hydraulikfluids im Druckakkumulator (26), sondern auch zum Druck des unter Druck stehenden Hydraulikfluids im Druckakkumulator ist.

9. System nach Anspruch 8, wobei die elektronische Steuereinheit (30) so vorgesehen ist, dass sie die angestrebte Drehzahl des Antriebs (22) auf eine maximale Drehzahl begrenzt, die proportional zur Menge und zum Druck des unter Druck stehenden Hydraulikfluids im Druckakkumulator (26) und ferner jederzeit proportional zu der vom Antrieb erzeugten Leistung ist.

10. System nach einem der Ansprüche 1 bis 9, wobei der Linearantrieb ein Hydraulikzylinder ist.

11. Verfahren, **gekennzeichnet durch** :
- Zurverfügungstellung eines Systems nach Anspruch 1, das durch das Verfahren gesteuert werden soll; und
- Begrenzung der angestrebten Drehzahl des Linearantriebs, damit diese eine vorbestimmte maximale Drehzahl nicht überschreitet, die proportional zur Menge des Druckfluids im Druckakkumulator (26) ist.

12. Kran, der umfasst:
- einen Ausleger zum Heben und Versetzen von Lasten; und
- ein System (10) nach einem der Ansprüche 1 bis 10, wobei der Ausleger so vorgesehen ist, dass er vom System bewegt werden kann.

13. Mobile Maschine, die einen Kran nach Anspruch 12 umfasst.

## Revendications

1. Système (10) qui fonctionne hydrauliquement et comprend :
- une conduite de pression (40) pour fournir du fluide hydraulique sous pression ;
- une pompe (12) configurée pour fournir du fluide hydraulique sous pression à la conduite de pression ;
- un actionneur (22) connecté à la conduite de pression, pour recevoir du fluide hydraulique sous pression à partir de la conduite de pression et pour déplacer l'actionneur ;
- un dispositif de vanne (38) configuré pour commander l'écoulement de fluide hydraulique sous pression à partir de la conduite de pression jusqu'à l'actionneur, et la vitesse de l'actionneur ;
- une unité de commande électronique (30) configurée pour surveiller et commander les fonctions du système, pour commander le dispositif de vanne par un signal de commande (32) en fonction de la vitesse de l'actionneur souhaitée à tout moment ;
- un accumulateur de pression (26) connecté à la conduite de pression, à partir duquel l'accumulateur de pression est conçu pour recevoir du fluide hydraulique sous pression et auquel l'accumulateur de pression est conçu pour, simultanément avec la pompe, fournir du fluide hydraulique sous pression pour déplacer l'actionneur ;
le système étant **caractérisé par** :
- un dispositif capteur (34, 36) configuré pour :
- i. mesurer la pression du fluide hydraulique contenu dans la conduite de pression (40) à tout moment donné, et transmettre un signal de mesure proportionnel à la pression du fluide hydraulique, à l'unité de commande électronique (30), l'unité de commande électronique étant configurée pour déduire la quantité de fluide hydraulique dans l'accumulateur de pression à partir des propriétés de l'accumulateur de pression et de la pression du fluide hydraulique ; ou
- ii. mesurer, directement ou indirectement, la quantité de fluide hydraulique sous pression dans l'accumulateur de pression à tout moment, et transmettre un signal de mesure proportionnel à la quantité de fluide hydraulique sous pression, à l'unité de commande électronique (30), le dispositif capteur étant connecté à l'accumulateur de pression ;
- des dispositifs de réglage configurés pour générer un signal de réglage (50) et pour régler le signal de commande afin qu'il soit proportionnel à la vitesse cible de l'actionneur à tout moment ;
- l'actionneur (22) étant un actionneur linéaire ; et
- l'unité de commande électronique (30) qui est configurée pour limiter la vitesse ciblée de l'actionneur linéaire pour ne pas dépasser une vitesse maximale prédéterminée qui est proportionnelle à la quantité de fluide hydraulique sous pression dans l'accumulateur de pression (26).

2. Système selon la revendication 1, dans lequel l'unité de commande électronique (30) est configurée pour limiter la vitesse ciblée lorsque la quantité de fluide hydraulique sous pression est égale ou inférieure à une valeur limite prédéterminée.

3. Système selon la revendication 1 ou 2,
- dans lequel la pompe (12) est configurée pour produire un débit volumique limité à un débit volumique maximal prédéterminé de la pompe ; et
- dans lequel l'unité de commande électronique (30) est configurée pour réduire la vitesse ciblée de l'actionneur (22) afin qu'elle soit, à son niveau le plus bas, égale à une vitesse maximale prédéterminée qui est proportionnelle au débit volumique maximal de la pompe.

4. Système selon l'une quelconque des revendications 1 à 3, dans lequel plus la quantité de fluide hydraulique sous pression dans l'accumulateur de pression (26) est faible, plus la vitesse maximale prédéterminée est faible.

5. Système selon l'une quelconque des revendications 1 à 4, dans lequel les dispositifs de réglage comprennent un dispositif de commande (24) qui est un manche de commande pouvant être commandé manuellement.

6. Système selon l'une quelconque des revendications 1 à 5, dans lequel les dispositifs de réglage comprennent un dispositif de commande (24) connecté à l'unité de commande électronique (30), configuré pour générer le signal de réglage (50), et configuré pour régler le signal de commande (32) pour être proportionnel à la position du dispositif de commande.

7. Système selon l'une quelconque des revendications 1 à 6, dans lequel la pompe (12) est configurée pour produire un débit volumique limité à un débit volumique maximal prédéterminé de la pompe.

8. Système selon l'une quelconque des revendications 1 à 7, dans lequel l'unité de commande électronique (30) est configurée pour limiter la vitesse ciblée de l'actionneur (22) à une vitesse maximale qui est proportionnelle non seulement à la quantité du fluide hydraulique sous pression dans l'accumulateur de pression (26) mais aussi à la pression du fluide hydraulique sous pression dans l'accumulateur de pression.

9. Système selon la revendication 8, dans lequel l'unité de commande électronique (30) est configurée pour limiter la vitesse ciblée de l'actionneur (22) à une vitesse maximale proportionnelle à la quantité et à la pression du fluide sous pression dans l'accumulateur de pression (26), et également proportionnelle à la puissance générée par l'actionneur à tout moment.

10. Système selon l'une quelconque des revendications 1 à 9, dans lequel l'actionneur linéaire est un vérin hydraulique.

11. Procédé, **caractérisée par** :
- la fourniture d'un système selon la revendication 1, devant être commandé par le procédé ; et
- la limitation de la vitesse ciblée de l'actionneur linéaire pour qu'elle ne dépasse pas une vitesse maximale prédéterminée qui est proportionnelle à la quantité de fluide sous pression dans l'accumulateur de pression (26).

12. Grue comprenant :
- une flèche pour lever et transférer des charges ; et
- un système (10) selon l'une quelconque des revendications 1 à 10, la flèche étant configurée pour être mobile par le système.

13. Machine mobile comprenant une grue selon la revendication 12.
